# EUROPEAN PATENT SPECIFICATION

(11) **EP 2 695 481 B1**
(45) Date of publication and mention of the grant of the patent: **18.10.2017**
(21) Application number: 11862557.3
(22) Date of filing: 28.12.2011
(51) Int. Cl.: H04W 72/04, H04L 5/00, H04B 7/04, H04W 92/20

(54) **FLEXIBLE CONFIGURATION OF UPLINK AND DOWNLINK RATIO BY EXCHANGING INFORMATION USING AN X2 INTERFACE**
FLEXIBLE KONFIGURATION VON UPLINK -UND DOWNLINK-VERHÄLTNIS DURCH AUSTAUSCH VON INFORMATIONEN ÜBER EINE X2-SCHNITTSTELLE
CONFIGURATION FLEXIBLE DE RAPPORT LIAISON MONTANTE-LIAISON DESCENDANTE PAR ÉCHANGE D'INFORMATIONS À L'AIDE D'UNE INTERFACE X2

(30) Priority: 01.04.2011 US 201161471042 P
(43) Date of publication of application: 12.02.2014
(73) Proprietor: Intel Corporation, Santa Clara, CA 95054 (US)
(72) Inventor: WANG, Ping, Beijing 100190 (CN); FWU, Jong-Kae, Sunnyvale California 94087 (US); NIU, Huaning, Milpitas California 95035 (US)
(74) Representative: HGF Limited
(86) International application number: PCT/US2011/067671
(87) International publication number: WO 2012/134581

(56) References cited:
- GB-A- 2 458 258
- US-A1- 2005 220 049
- US-A1- 2008 212 479
- US-A1- 2009 201 838
- US-A1- 2010 184 437
- "3rd Generation Partnership Project; Technical Specification Group Radio Access Network; Evolved Universal Terrestrial Radio Access Network (E-UTRAN); X2 application protocol (X2AP) (Release 10)", 3GPP STANDARD; 3GPP TS 36.423, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.0, 21 December 2010 (2010-12-21) , pages 1-123, XP050462198, [retrieved on 2010-12-21]

## Description

### TECHNICAL FIELD

The present disclosure relates generally to wireless communications. More particularly, the present disclosure relates to communicating operating conditions within wireless communication systems.

### BACKGROUND

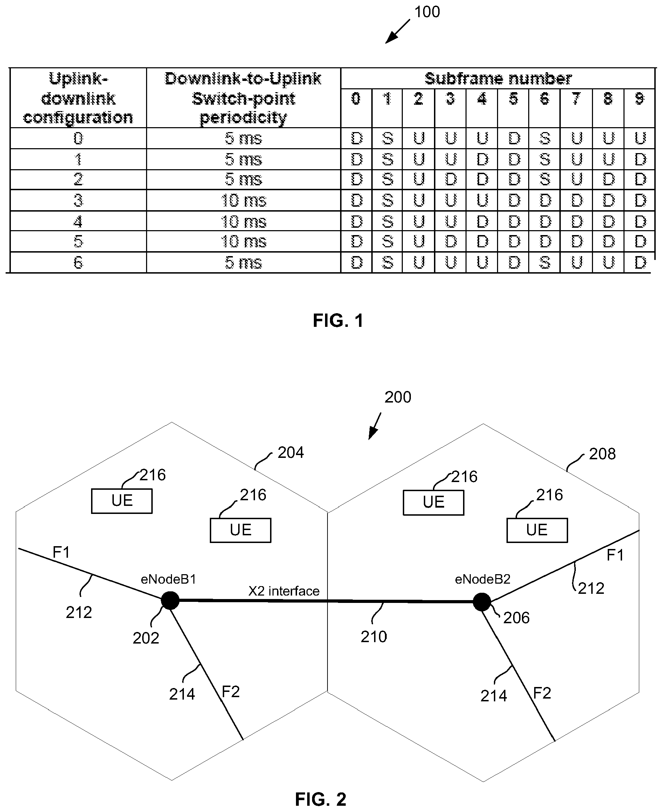

In the current 3rd Generation Partnership Project (3GPP) long term evolution (LTE) time division duplex (TDD)-Advanced systems, the same frequency bands are used for the uplink and downlink transmissions between enhanced node Bs (eNodeBs) and user equipment (UE). Uplink and downlink transmissions are separated by transmitting either uplink data or downlink data at each pre-determined block of time, known as subframes, on the same frequency bands. In time division duplex (TDD) deployment, the uplink and downlink transmissions are structured into radio frames, each 10 ms in time length. Each radio frame can comprise two half-frames of each 5 ms in time length. Each half-frame, in turn, comprises five subframes of each 1 ms in time length. Particular designations of subframes within a radio frame for uplink or downlink transmission - referred to as uplink and downlink configurations - can be defined. The seven supported uplink and downlink configurations (also referred to ULiDL configurations, uplink-downlink configurations, or uplink-downlink ratio configurations) are shown in a table 100 of FIG. 1, in which "D" denotes a subframe reserved for downlink transmission, "U" denotes a subframe reserved for uplink transmission, and "S" denotes a special subframe which includes the downlink pilot time slot (DwPTS), guard period (GP) and uplink pilot time slot (UpPTS) fields. Note, among other things, that some configurations have more uplink subframes than other configurations. For example, Configuration 0 has six uplink subframes while Configuration 2 has two uplink subframes.

Once the evolved universal terrestrial radio access network (EUTRAN) decides which one of the above uplink-downlink configurations applies for a given eNodeB, this configuration is not changed during normal operation of the cell or cells served by the eNodeB. This is the case even when uplink or downlink transmission loads are mismatched to the current uplink-downlink configuration. The present EUTRA network lacks the capabilities to implement flexible or dynamic configuration of uplink and downlink ratio configurations.

GB 2 458 258 discloses a mobile communications system in which base stations communicate with each other using a Master/Slave protocol to exchange load balancing information that can be used to control the handover between neighbouring base stations or cells to share scarcely available radio resources and the processing load between available base stations.

According to a first aspect of the invention, there is provided a first base station as claimed in claim 1.

According to a second aspect of the invention, there is provided a method for exchanging traffic information to dynamically adjust a downlink and uplink configuration, as claimed in claim 9.

Further embodiments of the invention are included in the dependent claims.

### BRIEF DESCRIPTION OF THE DRAWINGS

FIG. 1 illustrates supported uplink-downlink ratio configurations under the current 3GPP LTE TDD-Advanced standard.
FIG. 2 illustrates an example (portion) of a wireless communications network according to some embodiments.
FIG. 3 illustrates an example block diagram showing details of first and second eNodeBs of FIG. 2 according to some embodiments.
FIGs. 4A-4E illustrate example flow diagrams providing a mechanism to obtain and exchange system/cell load information (e.g., user traffic pattern) between neighboring eNodeBs to facilitate dynamic adjustment of uplink-downlink ratio configuration according to some embodiments.
FIGs. 5A-5C illustrates example downlink and uplink power or load information that can be exchanged between eNodeBs according to some embodiments.

### DETAILED DESCRIPTION

The following description is presented to enable any person skilled in the art to create and use a computer system configuration and related method and article of manufacture to obtain and exchange system/cell information relating to user traffic pattern among eNodeBs in a wireless communications network. In one embodiment, the information exchanged among the eNodeBs comprises downlink subframe transmission power information and uplink subframe reception power information. In another embodiment, the information exchanged among the eNodeBs comprises downlink subframe loading information and uplink subframe loading information. The exchange of such information facilitates implementation of a flexible or dynamic configuration of the uplink and downlink ratio.

Various modifications to the embodiments will be readily apparent to those skilled in the art, and the generic principles defined herein may be applied to other embodiments and applications without departing from the scope of the invention. Moreover, in the following description, numerous details are set forth for the purpose of explanation. However, one of ordinary skill in the art will realize that embodiments of the invention may be practiced without the use of these specific details. In other instances, well-known structures and processes are not shown in block diagram form in order not to obscure the description of the embodiments of the invention with unnecessary detail. Thus, the present disclosure is not intended to be limited to the embodiments shown, but is to be accorded the widest scope consistent with the principles and features disclosed herein.

FIG. 2 illustrates an example (portion) of a wireless communications network 200 according to some embodiments. In one embodiment, the wireless communications network 200 comprises an evolved universal terrestrial radio access network (EUTRAN) using the 3rd Generation Partnership Project (3GPP) long term evolution (LTE) standard and operating in time division duplexing (TDD) mode. The wireless communications network 200 includes a first enhanced Node B (eNodeB or eNB) 202, a second eNodeB 206, and a plurality of user equipments (UEs) 216. The first and second eNodeBs 202, 206 share a wired connection with each other via an X2 interface 210.

The first eNodeB 202 (also referred to as eNodeB1 or a first base station) is configured to serve a certain geographic area, denoted as a first cell 204. The UEs 216 located within the first cell 204 are served by the first eNodeB 202. The first eNodeB 202 is configured to communicate with the UEs 216 on a first carrier frequency 212 (F1) and optionally, one or more secondary carrier frequencies, such as a second carrier frequency 214 (F2).

The second eNodeB 206 is similar to the first eNodeB 202 except it serves a different cell from that of the first eNodeB 202. The second eNodeB 206 (also referred to as eNodeB2 or a second base station) is configured to serve another certain geographic area, denoted as a second cell 208. The UEs 216 located within the second cell 208 are served by the second eNodeB 206. The second eNodeB 206 is configured to communicate with the UEs 216 on the first carrier frequency 212 (F1) and optionally, one or more secondary carrier frequencies, such as the second carrier frequency 214 (F2).

The first and second cells 204, 208 may or may not be immediately co-located next to each other. However, the first and second cells 204, 208 are situated close enough to be considered neighboring cells, such that the user traffic pattern of one of the first or second eNodeB 202, 206 is relevant to the other eNodeB. For example, one of the UE 216 served by the first eNodeB 202 may move from the first cell 204 to the second cell 208, in which case the second eNodeB 206 takes over from the first eNodeB 202. Due to the base station hand-off (or potential for hand-off), neighboring base stations benefit from knowing about each other's user traffic patterns, as discussed in detail below.

The UEs 216 may comprise a variety of devices configured to communicate within the wireless communications network 200 including, but not limited to, cellular telephones, smart phones, tablets, laptops, desktops, personal computers, servers, personal digital assistants (PDAs), web appliances, set-top box (STB), a network router, switch or bridge, and the like.

It is understood that the wireless communications network 200 includes more than two eNodeBs. It is also understood that each of the first and second eNodeBs 202, 206 can have more than one neighboring eNodeB. As an example, the first eNodeB 202 may have six or more neighboring eNodeBs.

In one embodiment, the UEs 216 located in respective first or second cells 204, 208 transmits data to its respective first or second eNodeB 202, 206 (uplink transmission) and receives data from its respective first or second eNodeB 202, 206 (downlink transmission) using radio frames comprising Orthogonal Frequency-Division Multiple Access (OFDMA) frames configured for time division duplexing (TDD) operations. Each of the radio frames comprises a plurality of uplink and downlink subframes, the uplink and downlink subframes configured in accordance with the uplink-downlink ratio configuration selected from among the supported uplink-downlink ratio configurations shown in FIG. 1. (See 3GPP TS 36.211 Version 9.1.0, E-UTRA Physical Channels and Modulation (Release 9), March 2010.)

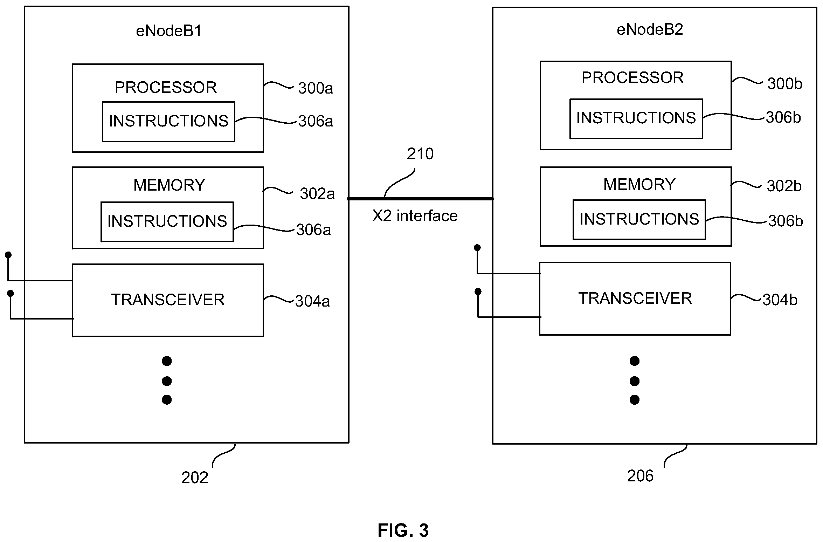

FIG. 3 illustrates an example block diagram showing details of the first and second eNodeBs 202, 206 according to some embodiments. The first eNodeB 202 includes a processor 300a, a memory 302a, a transceiver 304a, instructions 306a, and other components (not shown). The second eNodeB 206 includes a processor 300b, a memory 302b, a transceiver 304b, instructions 306b, and other components (not shown). The first and second eNodeB 202, 206 are similar to each other in hardware, firmware, software, and/or in configurations.

Each of the processors 300a, b comprises one or more central processing units (CPUs), graphics processing units (GPUs), or both. The processors 300a, b are configured to provide processing and control functionalities for the first and second eNodeBs 202, 206, respectively. Each of the memories 302a, b comprises one or more transient and static memory units configured to store instructions and data for the first and second eNodeBs 202, 206, respectively. Each of the transceivers 304a, b comprises one or more transceivers including a multiple-input and multiple-output (MIMO) antenna to support MIMO communications. The transceivers 304a, b, are configured to receive uplink transmissions and transmit downlink transmissions with the UEs 216, among other things, for the first and second eNodeBs 202, 206, respectively. Each of the instructions 306a, b comprises one or more sets of instructions or software executed on a computing device (or machine) to cause such computing device (or machine) to perform any of the methodologies discussed herein. The instructions 306a, b (also referred to as computer- or machine-executable instructions) may reside, completely or at least partially, within the processors 300a, b and/or the memories 302a, b during execution thereof by the first and second eNodeBs 202, 206, respectively. The processors 300a, b and memories 302a, b also comprise machine-readable media.

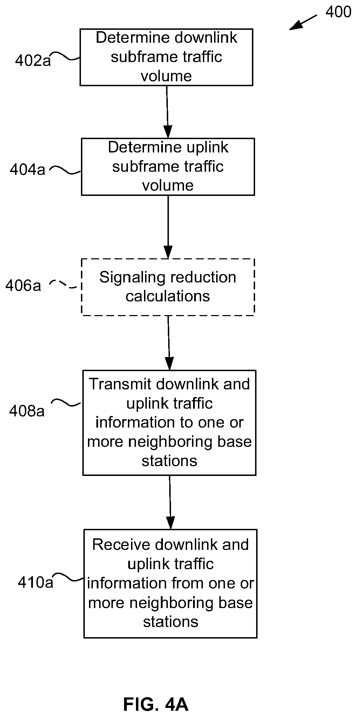

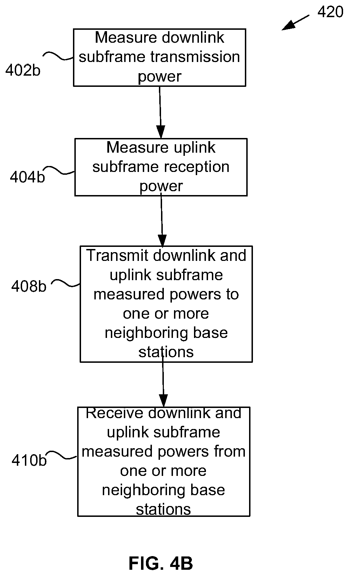

FIG. 4A illustrates an example flow diagram 400 providing a mechanism to obtain and exchange system/cell load information (e.g., user traffic pattern) between neighboring eNodeBs to facilitate dynamic adjustment of uplink-downlink ratio configuration according to some embodiments. FIGs. 4B-4E illustrate example flow diagrams 420, 440, 460, and 460, respectively, providing different embodiments of implementation of the flow diagram 400. FIG. 4A is described below in conjunction with FIGs. 4B-4E.

At a block 402a in FIG. 4A, the first eNodeB 202 is configured to determine the traffic volume of the downlink transmission for each subframe within a measurement period, for the first carrier frequency 212. The measurement period comprising a pre-determined reporting period within which such measurement is taken and exchanged with neighboring eNodeBs. Considering the different number of complete hybrid automatic repeat request (HARQ) process transmissions and re-transmissions for the uplink-downlink ratio configurations provided in FIG. 1, Configurations 1 to 5 may take 20 microseconds (ms), Configuration 0 may take 70 ms, and Configuration 6 may take 60 ms. Thus, the reporting period may be a multiple integer of 20 ms, 60 ms, or 70 ms, such as, but not limited to, 420 ms. The reporting period can be any pre-determined periodic or non-periodic time period.

At a block 404a, the first eNodeB 202 is configured to determine the traffic volume of the uplink transmission for each subframe within the measurement period, for the first carrier frequency 212. The downlink and uplink traffic volume information comprise certain system/cell information or metric associated with user traffic pattern, such as the volume or load of the UEs 216 on the first eNodeB 202.

Next at a block 406a, the determined downlink and uplink traffic volume information may optionally be processed to reduce or simplify the amount of reporting data. Then at a block 408a, the determined downlink and uplink traffic information (either in its full form or in a reduced form, if block 406a is implemented) is transmitted to each of the neighboring base stations for the first eNodeB 202 via the appropriate X2 interfaces (e.g., transmits to the second eNodeB 206 via the X2 interface 210). Lastly, at a block 410a, the first eNodeB 202 correspondingly receives the downlink and uplink traffic information (again, either in its full form or in a reduced form) determined at each of its neighboring base stations via the appropriate X2 interfaces (e.g., receives from the second eNodeB 206 via the X2 interface 210). The blocks 408a and 410a comprise an exchange of a given eNodeB's downlink and uplink traffic information with its neighbor eNodeBs (also referred to as inter-eNodeBs). Accordingly, during the measurement period, the first eNodeB 202, second eNodeB 206, and other eNodeBs are performing blocks 402a, 404a, and 406a (optionally) to determine its downlink and uplink traffic information for exchange with its neighbor eNodeBs.

For each measurement period, blocks 402a-410a are also performed for the second carrier frequency 214 and any other carrier component served by the first eNodeB 202. Similarly, although the flow diagram 400 is described above with respect to the first eNodeB 202, blocks 402a-410a are also performed by the second eNodeB 206. Thus, blocks 402a-410a are performed per measurement period per carrier component by each eNodeB within the wireless communications network 200. It is understood that although the downlink block 402a is shown before the uplink block 404a in FIG. 4A, block 402a may be performed after block 404a or block 402a may be performed simultaneous with block 404a. The transmit block 408a may be performed after the receive block 410a, or block 408a may be performed simultaneous with block 410a.

Accordingly, the mechanism provided by the flow diagram 400 increases the overall system performance or throughput by providing the respective neighboring eNodeBs meaningful and timely data from which intelligent adjustment or adaptation of the uplink-downlink ratio configuration can be implemented.

Flow diagram 420 of FIG. 4B illustrates one embodiment of the flow diagram 400 of FIG. 4A. In one embodiment, the information exchanged among the eNodeBs comprises measured downlink subframe transmission power and uplink subframe reception power. The power value or level is indicative of the traffic load. Generally, the higher the power value, the higher the traffic load. (Note that blocks in flow diagram 420 that are like numbered to blocks in flow diagram 400 correspond to each other (e.g., block 402b in flow diagram 420 corresponds to block 402a in flow diagram 400)).

In particular, at a block 402b, the first eNodeB 202 is configured to measure a downlink subframe transmission power for each downlink subframe within the measurement period (also referred to as the reporting period) for the first carrier frequency 212. The downlink subframe transmission power for the first cell 204 comprises the sum of the average power of the power contributions (in Watts) that are transmitted by the first eNodeB 202 to all of the resource elements in each downlink subframe within its operating system bandwidth (e.g., first carrier frequency 212). The average power of each antenna port of the transceiver 304a is summed together to obtain the average power from all of the antenna ports.

At a block 404b, the first eNodeB 202 is configured to measure an uplink subframe reception power for each uplink subframe within the measurement period for the first carrier frequency 212. The uplink subframe reception power for the first cell 204 comprises the sum of the average power of the power contributions (in Watts) from all of the resource elements received by the first eNodeB 202 in each uplink subframe within its operating system bandwidth (e.g., first carrier frequency 212) from all the antenna ports of the transceiver 304a. In other words, the average power of each antenna port of the transceiver 304a is summed together to obtain the average power from all of the antenna ports.

Next at a block 408b, the measured downlink subframe transmission power and the uplink subframe reception power for the reporting period (from blocks 402b, 404b) are transmitted from the first eNodeB 202 to each of its one or more neighboring eNodeBs via respective X2 interfaces with those neighboring eNodeBs. As an example, the measured uplink and downlink power information are transmitted to the second eNodeB 206 via the X2 interface 210. The transmitted information is referred to as the downlink subframe (transmission power) information and the uplink subframe (reception power) information.

The first eNodeB 202 also receives the downlink and uplink subframe information from one or more of its neighboring eNodeBs (block 410b). As an example, the measured uplink and downlink power from the second eNodeB 206 are provided to the first eNodeB 202 via the X2 interface 210. Blocks 408b and 410b comprise the exchange of downlink and uplink power information between neighboring eNodeBs. Although exchanging such subframe power information represents sizable signaling overhead over the X2 interfaces, the eNodeBs receive accurate data about the subframe powers to decide when/if to switch to a different uplink-downlink ratio configuration.

Similar to the discussion above for FIG. 4A, blocks 402b and 404b may be performed simultaneously with each other or block 404b may be performed before block 402b. Blocks 408b and 410b may be performed simultaneous with each other or block 410b may be performed before block 408b. If there is more than one carrier served by the first cell 204, flow diagram 420 is also performed for each of these secondary carriers (e.g., second carrier frequency 214) for the given reporting period.

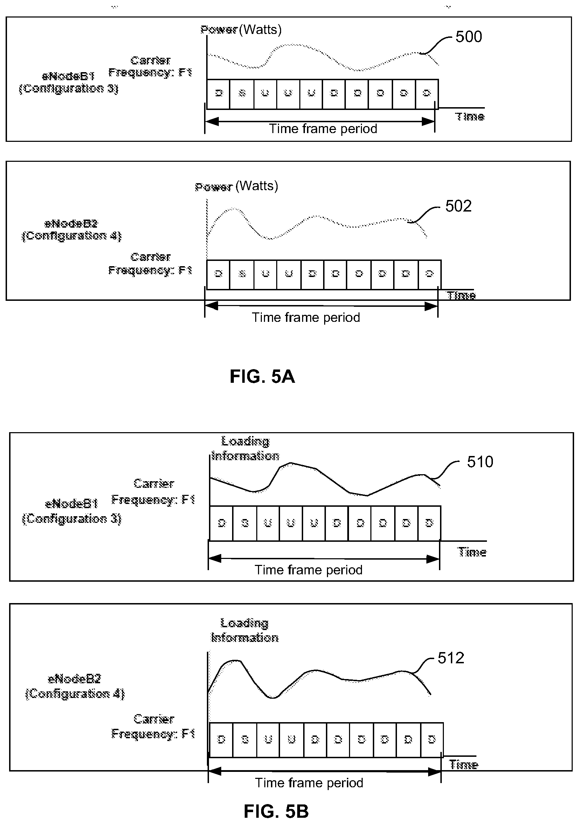

FIG. 5A illustrates example downlink and uplink power information that can be exchanged between the first eNodeB 202 and second eNodeB 206 according to some embodiments. A first power information plot 500 represents the downlink and uplink power values for a radio frame time period measured by the first eNodeB 202 for the first carrier frequency 212. The reporting period may be longer than the radio frame time period shown in FIG. 5A. The first eNodeB 202 is shown configured for uplink-downlink ratio configuration 3. Notice, for example, that the power information associated with subframe 2 (an uplink subframe) is low, which indicates that subframe 2 is under-utilized and that there is little uplink reception taking place. Similarly, the power value associated with subframe 6 (a downlink subframe) is low, which indicates that subframe 6 is under-utilized and that there is little downlink transmission taking place.

A second power information plot 502 represents the downlink and uplink power values for a radio frame time period measured by the second eNodeB 206 for the first carrier frequency 212. Unlike the first eNodeB 202, the second eNodeB 206 is configured for uplink-downlink ratio configuration 4. In comparison to the first power information plot 500, the second power information plot 502 shows that there is more of a balance in downlink and uplink utilization at the second eNodeB 206.

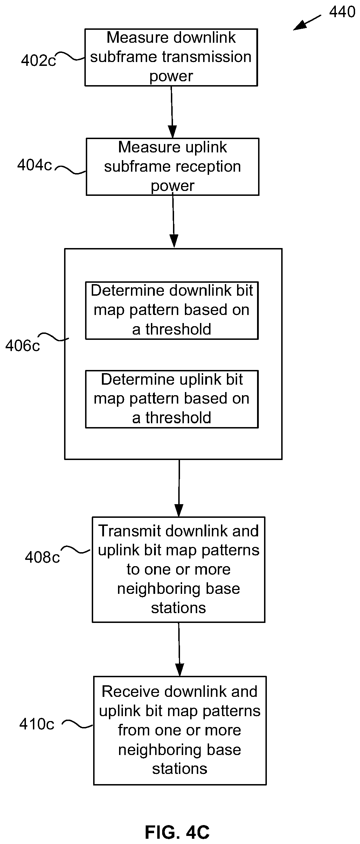

Flow diagram 440 of FIG. 4C illustrates another embodiment of the flow diagram 400 of FIG. 4A. In this embodiment, the information exchanged among the eNodeBs comprises a simplified version of the measured downlink subframe transmission power and uplink subframe reception power. (Note that blocks in flow diagram 440 that are like numbered to blocks in flow diagrams 400, 420 correspond to each other (e.g., block 402c in flow diagram 440 corresponds to blocks 402a, b in flow diagrams 400, 420, respectively)).

Blocks 402c and 404c are the same as blocks 402b and 404c, respectively. Once the downlink and uplink powers have been determined, it is simplified to reduce the signaling overhead during signal exchange (block 406c). The measured downlink subframe transmission power values are converted into a bit pattern (also referred to as a bit map pattern or multi-subframe bit pattern) based on a pre-determined threshold value. A power value for each downlink subframe that is above the threshold value is designated a bit value of "1" (high) and a power value for each downlink subframe that is below the threshold value is designated a bit value of "0" (low). The amount of data has thus been significantly reduced. The measured uplink subframe reception power values are similarly converted into a bit pattern based on the pre-determined threshold value. In one embodiment, two bit patterns may be generated - one for the downlink power values and another for the uplink power values. In another embodiment, a single bit pattern may be generated, one that commingles the downlink and uplink subframes in accordance with the operating uplink-downlink ratio configuration. For example, the first power information plot 500 converts to bit pattern 1001100011 and the second power information plot 502 converts to bit pattern 1100111110.

Next at a block 408c, the generated bit pattern(s) corresponding to the downlink and uplink power values are transmitted from the first eNodeB 202 to each of its one or more neighboring eNodeBs via respective X2 interfaces with those neighboring eNodeBs. As an example, the bit pattern(s) are transmitted to the second eNodeB 206 via the X2 interface 210. The transmitted information is referred to as the downlink subframe (bit pattern) information and the uplink subframe (bit pattern) information.

The first eNodeB 202 also receives bit pattern(s) corresponding to the downlink and uplink power values from one or more of its neighboring eNodeBs (block 410c). As an example, the bit pattern(s) from the second eNodeB 206 are provided to the first eNodeB 202 via the X2 interface 210. Blocks 408c and 410c comprise the exchange of downlink and uplink power information between neighboring eNodeBs. In this embodiment, the signaling overhead over the X2 interfaces is reduced relative to exchanging the (raw) downlink and uplink power values. However, due to the simplification of the subframe power values to high or low values, less information about the user traffic pattern is shared among the eNodeBs.

Similar to the discussion above for FIG. 4A, blocks 402c and 404c may be performed simultaneous with each other or block 404c may be performed before block 402c. Blocks 408c and 410c may be performed simultaneous with each other or block 410c may be performed before block 408c. If there is more than one carrier served by the first cell 204, flow diagram 440 is also performed for each of these secondary carriers (e.g., second carrier frequency 214) for the given reporting period.

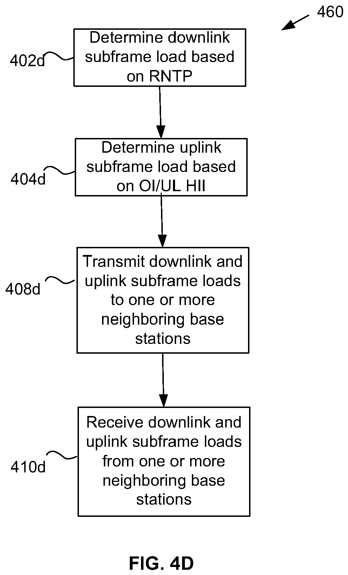

Flow diagram 460 of FIG. 4D illustrates another embodiment of the flow diagram 400 of FIG. 4A. In this embodiment, the information exchanged among the eNodeBs comprises traffic load information in the downlink and the uplink. The current X2 interface design supports the option to exchange certain traffic loading information among the eNodeBs. (See 3GPP TS36.423 Version 10.2.0, E-UTRA X2 Application Protocol (Release 10), June 2011.) For example, relative narrow band transmission power (RNTP) may be transmitted over the X2 interface when the transmission power information exceeds a specified threshold. The frequency of the RNTP transmission is limited to no more than once every 200 ms to prevent messaging overload. As another example, the uplink interference overload indication (OI) and the uplink high interference indication (HII) (collectively referred to as the OI/HII in the uplink or the OI/UL HII in the uplink) are two fields in the X2 load indication message, which may be transmitted over the X2 interface to avoid resource collision or to lower the power on those colliding resources. The existing RNTP information in the downlink and the OI/HII information in the uplink can be used to exchange downlink and uplink traffic load information between eNodeBs. Generally the higher the RNTP values, the greater the downlink traffic load, and the higher the OI/HII values, the greater the uplink traffic load. (Note that blocks in flow diagram 460 that are like numbered to blocks in flow diagram 400 correspond to each other (e.g., block 402d in flow diagram 460 corresponds to block 402a in flow diagram 400)).

At a block 402d, the first eNodeB 202 is configured to determine downlink subframe traffic load information using the subframe-level RNTP in the downlink for each downlink subframe within the reporting period for the first carrier frequency 212. Details about the subframe-level RNTP are provided, for example, in Section 5.2.1 of 3GPP TS 36.213 Version 10.2.0, E-UTRA Physical Layer Procedures (Release 10), June 2011. The downlink subframe traffic load information comprise the subframe-level RNTP or values proportional to (or are a function of) the subframe-level RNTP.

At a block 404d, the first eNodeB 202 is configured to determine uplink subframe traffic load information using the subframe-level OI/HII in the uplink for each uplink subframe within the reporting period for the first carrier frequency 212. The OI/HII in the uplink quantitatively indicates whether a given subframe is approaching an overload, experiencing high interference, or having other adverse uplink reception condition (typically as a function of the uplink subframe traffic load). Details about the OI/HII in the uplink are provided, for example, in Sections 9.2.17 and 9.2.18 of 3GPP TS 36.423 Version 10.2.0, E-UTRA X2 Application Protocol (Release 10), June 2011. The uplink subframe traffic load information comprise the OI/HII in the uplink, are values proportional to (or are a function of) the OI/HII in the uplink, or values derived from the OI/HII in the uplink.

Next at a block 408d, the downlink and uplink subframe traffic load information for the reporting period (from blocks 402d and 404d) are transmitted from the first eNodeB 202 to each of its one or more neighboring eNodeBs via respective X2 interfaces with those neighboring eNodeBs. As an example, the downlink subframe traffic load information are transmitted to the second eNodeB 206 via the X2 interface 210. The transmitted information is referred to as the downlink subframe (traffic load) information and the uplink subframe (traffic load) information.

The first eNodeB 202 also receives downlink and uplink subframe traffic load information from one or more of its neighbor eNodeBs (block 410d). As an example, the downlink and uplink subframe traffic load information from the second eNodeB 206 are provided to the first eNodeB 202 via the X2 interface 210. Blocks 408d and 410d comprise the exchange of downlink and uplink subframe traffic load information between neighboring eNodeBs. Although exchanging such subframe load information represents sizable signaling overhead over the X2 interfaces, the eNodeBs receive accurate data about the subframe load values to decide when/if to switch to a different uplink-downlink ratio configuration.

Similar to the discussion above for FIG. 4A, blocks 402d and 404d may be performed simultaneously with each other or block 404d may be performed before block 402d. Blocks 408d and 410d may be performed simultaneously with each other or block 410d may be performed before block 408d. If there is more than one carrier served by the first cell 204, flow diagram 460 is also performed for each of these secondary carriers (e.g., second carrier frequency 214) for the given reporting period.

FIG. 5B illustrates example downlink and uplink load information that can be exchanged between the first eNodeB 202 and second eNodeB 206 according to some embodiments. A first load information plot 510 represents the downlink and uplink load information for a radio frame time period measured by the first eNodeB 202 for the first carrier frequency 212. The reporting period may be longer than the radio frame time period shown in FIG. 5B. The first eNodeB 202 is shown configured for uplink-downlink ratio configuration 3. Notice, for example, that the load information associated with subframe 2 (an uplink subframe) is low, which indicates that subframe 2 is under-utilized. There may be few uplink receptions taking place within that subframe or the uplink receptions within the subframe have low data loads (e.g., UEs 216 are sending text messages rather than uploading photos to websites). Similarly, the load information associated with subframe 6 (a downlink subframe) is low, which indicates that subframe 6 is under-utilized.

A second load information plot 512 represents the downlink and uplink load information for a radio frame time period determined by the second eNodeB 206 for the first carrier frequency 212. Unlike the first eNodeB 202, the second eNodeB 206 is configured for uplink-downlink ratio configuration 4. In comparison to the first load plot 510, the second load information plot 512 shows that there is more of a balance in downlink and uplink loads at the second eNodeB 206.

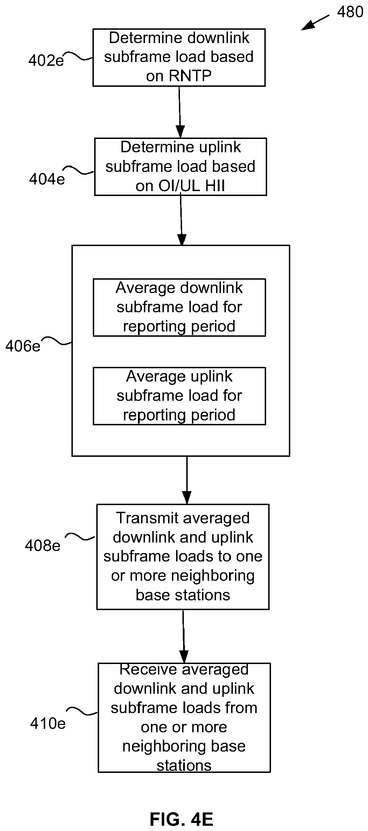

Flow diagram 480 of FIG. 4E illustrates another embodiment of the flow diagram 400 of FIG. 4A. In this embodiment, the information exchanged among the eNodeBs comprises a simplified version of the downlink and uplink subframe traffic load information. (Note that blocks in flow diagram 480 that are like numbered to blocks in flow diagrams 400, 460 correspond to each other (e.g., block 402e in flow diagram 480 corresponds to blocks 402a, d in flow diagrams 400, 460, respectively)).

Blocks 402e and 404e are the same as blocks 402d and 404d, respectively. Once the downlink and uplink subframe traffic load information have been determined, these values are simplified to reduce the signaling overhead during signal exchange (block 406e). The downlink subframe traffic load information for the reporting period is averaged. This averaged value is referred to as an average downlink (traffic) load, average downlink (traffic) load value, average downlink subframe traffic load, average downlink subframe traffic load value, or average RNTP. The uplink subframe traffic load information for the reporting period is also averaged. This averaged value is referred to as an average uplink (traffic) load, average uplink (traffic) load value, average uplink subframe traffic load, average uplink subframe traffic load value, average OI/UL HII, or average OL/HII. Since the downlink load information is averaged across all the downlink subframes for the reporting period, the resulting average value provides coarse information about the downlink traffic load compared to the downlink subframe load information in block 402e. The average uplink load value similarly provides coarser information about the uplink traffic load compared to the uplink subframe load information in block 404e.

Next at a block 408e, the average downlink and uplink subframe traffic load values are transmitted from the first eNodeB 202 to each of its one or more neighboring eNodeBs via respective X2 interfaces with those neighboring eNodeBs. As an example, the average load values are transmitted to the second eNodeB 206 via the X2 interface 210. The transmitted information is referred to as the downlink subframe (average traffic load) information and the uplink subframe (average traffic load) information.

The first eNodeB 202 also receives average downlink and uplink subframe traffic load information from one or more of its neighboring eNodeBs (block 410e). As an example, an average downlink load information and an average uplink load information associated with the second eNodeB 206 are provided to the first eNodeB 202 via the X2 interface 210. Blocks 408e and 410e comprise the exchange of averaged downlink and uplink load information between neighboring eNodeBs. In this embodiment, the signaling overhead over the X2 interfaces is reduced relative to exchanging the (raw) downlink and uplink load information. However, due to the simplification of the subframe load values by averaging, less information about the user traffic pattern is shared among the eNodeBs.

Similar to the discussion above for FIG. 4A, blocks 402e and 404e may be performed simultaneously with each other or block 404e may be performed before block 402e. Blocks 408e and 410e may be performed simultaneously with each other or block 410e may be performed before block 408e. If there is more than one carrier served by the first cell 204, flow diagram 480 is also performed for each of these secondary carriers (e.g., second carrier frequency 214) for the given reporting period.

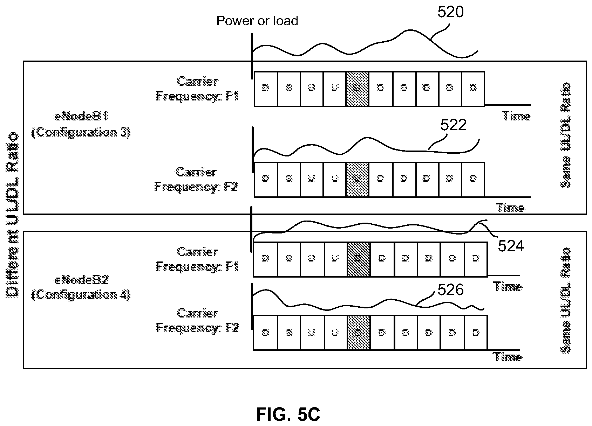

FIG. 5C illustrates example downlink and uplink subframe power or load information for carrier aggregation according to some embodiments. Each of plots 520, 522, 524, 526 represents subframe power or load information obtained for a radio frame time period. The plot 520 is generated by the first eNodeB 202 operating in the uplink-downlink ratio configuration 3 for the primary carrier (e.g., the first carrier frequency 212). The plot 522 is generated by the first eNodeB 202 operating in Configuration 3 for a secondary carrier (e.g., the second carrier frequency 214). The plot 524 is generated by the second eNodeB 206 operating in Configuration 4 for the primary carrier (e.g., the first carrier frequency 212). The plot 526 is generated by the second eNodeB 206 operating in Configuration 4 for a secondary carrier (e.g., the second carrier frequency 214). The system/cell traffic information encoded in plots 520 and 522 for the first eNodeB 202 is exchanged with the system/cell traffic information encoded in plots 524 and 526 for the second eNodeB 206.

In this manner, a mechanism to increase overall system performance or throughput is facilitated by exchanging system/cell information or metric relating to user traffic pattern among neighboring eNodeBs per reporting period. The exchanged information relating to user traffic pattern comprises, but is not limited to, downlink subframe transmission power, uplink subframe reception power, loading information in both the downlink and in the uplink, downlink and uplink scheduling information, or simplified versions of the foregoing. The information can be exchanged using the X2 interface connecting pairs of eNodeBs. Such information assists the eNodeBs to implement a flexible or dynamic configuration of the uplink-downlink ratio.

The term "machine-readable medium," "computer readable medium," and the like should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the 5 machine to perform anyone or more of the methodologies of the present disclosure. The term "machine-readable medium" shall accordingly be taken to include, but not be limited to, solid-state memories, optical and magnetic media, and carrier wave signals.

It will be appreciated that, for clarity purposes, the above description describes some embodiments with reference to different functional units or processors. However, it will be apparent that any suitable distribution of functionality between different functional units, processors or domains may be used without detracting from embodiments of the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Although the present invention has been described in connection with some embodiments, it is not intended to be limited to the specific form set forth herein. One skilled in the art would recognize that various features of the described embodiments may be combined in accordance with the invention. Moreover, it will be appreciated that various modifications and alterations may be made by those skilled in the art without departing from the scope of the invention. For example, one or more blocks of flow diagram 400 may be implemented in a different order or simultaneous with each other. Determine downlink subframe traffic volume block 402a may be performed after or simultaneous with the determine uplink subframe traffic volume block 404a.

The following claims are hereby incorporated into the Detailed Description, with each claim standing on its own as a separate embodiment.

## Claims

1. A first base station (202) for exchanging traffic information dynamically to adjust a downlink and uplink configuration, the first base station **characterised by**:
a transceiver (304a); and
a processor (300a) in communication with the transceiver, the processor configured to:
determine (402a) a downlink subframe traffic volume for each downlink subframe within a reporting period,
determine (404a) an uplink subframe traffic volume for each uplink subframe within the reporting period, and
prepare a downlink subframe traffic information corresponding to the downlink subframe traffic volume and an uplink subframe traffic information corresponding to the uplink subframe traffic volume for the reporting period for transmission (408a) to a second base station (206) thereby providing the second base station with timely data from which adjustment or adaptation of an uplink-downlink ratio configuration can be implemented.

2. The first base station of claim 1, further comprising an X2 interface (210) in communication with the processor and the second base station, wherein the downlink subframe traffic information and the uplink subframe traffic information are transmitted to the second base station using the X2 interface.

3. The first base station of claim 1, wherein the downlink subframe traffic volume comprises a downlink subframe transmission power and the uplink subframe traffic volume comprises an uplink subframe reception power.

4. The first base station of claim 1, wherein the processor is further configured to:
determine a downlink bit value corresponding to the downlink subframe traffic volume based on a threshold value; and
determine an uplink bit value corresponding to the uplink subframe traffic volume based on the threshold value, wherein the downlink subframe traffic information comprises the downlink bit value and the uplink subframe traffic information comprises the uplink bit value.

5. The first base station of claim 1, wherein the downlink subframe traffic volume comprises information obtained from a downlink relative narrow band transmission power, RNTP, and the uplink subframe traffic volume comprises information obtained from an uplink overload indicator, OI/uplink high interference indication, HII.

6. The first base station of claim 5, wherein the processor is further configured to:
average the downlink relative narrow band transmission power, RNTP, over the reporting period; and
average the uplink overload indicator, OI/uplink high interference indication, HII, over the reporting period, wherein the downlink subframe traffic information comprises the averaged downlink relative narrow band transmission power, RNTP, and the uplink subframe traffic information comprises the averaged uplink overload indicator, OI/uplink high interference indication, HII.

7. The first base station of claim 1, wherein the processor is further configured to receive a second downlink subframe traffic information and a second uplink subframe traffic information from the second base station, or wherein the processor is configured to determine and transmit a second downlink subframe traffic information and a second uplink subframe traffic information for a second carrier served by the first base station.

8. The first base station of claim 1, wherein the first base station comprises an enhanced node B, eNodeB, configured to operate within a 3rd Generation Partnership Project, 3GPP, long term evolution, LTE, configured network and operating in time division duplexing, TDD, mode in which Orthogonal Frequency-Division Multiple Access, OFDMA, downlink and uplink subframes are communicated with user equipment, UE.

9. A first base station as claimed in claim 1, wherein the first base station is an enhanced node B (eNodeB), comprising:
an X2 interface in communication with the processor; and
wherein the second base station is a second eNodeB connected to the first eNodeB via the X2 interface, wherein the first eNodeB and the second eNodeB are configured for operation in a 3rd Generation Partnership Project, 3GPP, long term evolution, LTE, network.

10. The first base station of claim 9, wherein the processor is further configured to receive a second downlink subframe traffic information and a second uplink subframe traffic information from the second eNodeB via the X2 interface within the reporting period.

11. The first base station of claim 9, wherein the downlink subframe traffic volume comprises a downlink subframe transmission power and the uplink subframe traffic volume comprises an uplink subframe reception power, or
wherein the downlink subframe traffic volume information comprises a downlink bit value corresponding to the downlink subframe traffic volume in accordance with a threshold value and the uplink subframe traffic information comprises an uplink bit value corresponding to the uplink subframe traffic volume in accordance with the threshold value, or
wherein the downlink subframe traffic volume comprises a downlink subframe traffic load information and the uplink subframe traffic volume comprises an uplink subframe traffic load information, or
wherein the downlink subframe traffic volume comprises information obtained from a downlink relative narrow band transmission power, RNTP, and the uplink subframe traffic volume comprises information obtained from an uplink overload indicator, OI/uplink high interference indication, HII, and wherein the downlink subframe traffic volume information comprises an average of the downlink subframe traffic volume for the reporting period and the uplink subframe traffic volume information comprises an average of the uplink subframe traffic volume for the reporting period.

12. A method for exchanging traffic information dynamically to adjust a downlink and uplink configuration, the method comprising:
determining (402a), using a first base station (202), a downlink subframe traffic volume for each downlink subframe within a reporting period;
determining (404a) an uplink subframe traffic volume for each uplink subframe within the reporting period; and
transmitting (408a) a downlink subframe traffic information corresponding to the downlink subframe traffic volume and an uplink subframe traffic information corresponding to the uplink subframe traffic volume for the reporting period to a second base station (206) thereby providing the second base station with timely data from which adjustment or adaptation of an uplink-downlink ratio configuration can be implemented.

13. The method of claim 12, wherein the transmitting of the downlink subframe traffic information and the uplink subframe traffic information comprises transmitting over an X2 interface coupled between the first base station and the second base station.

14. The method of claim 12, wherein the downlink subframe traffic volume comprises a downlink subframe transmission power and the uplink subframe traffic volume comprises an uplink subframe reception power, or
wherein the downlink subframe traffic volume comprises a downlink subframe transmission power and the downlink subframe traffic information comprises a downlink bit value derived from the downlink subframe traffic volume in accordance with a threshold value, or
wherein the downlink subframe traffic volume comprises information obtained from a downlink relative narrow band transmission power, RNTP, and the uplink subframe traffic volume comprises information obtained from an uplink overload indicator, OI/uplink high interference indication, HII.

15. The method of claim 12, wherein the first base station comprises an enhanced node B, eNodeB, configured to operate in accordance with a 3rd Generation Partnership Project, 3GPP, long term evolution, LTE, network, and wherein the downlink subframe and the uplink subframe are included in at least one Orthogonal Frequency-Division Multiple Access, OFDMA, radio frame configured for time division duplexing, TDD, operation.

## Patentansprüche

1. Erste Basisstation (202) zum dynamischen Austauschen von Verkehrsinformationen, um eine Abwärtsstrecken- und Aufwärtsstreckenkonfiguration einzustellen, wobei die erste Basisstation **gekennzeichnet ist durch**:
einen Sender/Empfänger (304a); und
einen Prozessor (300a) in Kommunikation mit dem Sender/Empfänger, wobei der Prozessor dazu konfiguriert ist:
ein Abwärtsstrecken-Unterrahmenverkehrsvolumen für jeden Abwärtsstreckenunterrahmen innerhalb einer Meldeperiode zu bestimmen (402a),
ein Aufwärtsstrecken-Unterrahmenverkehrsvolumen für jeden Aufwärtsstreckenunterrahmen innerhalb der Meldeperiode zu bestimmen (404a), und
Abwärtsstrecken-Unterrahmenverkehrsinformationen entsprechend dem Abwärtstrecken-Unterrahmenverkehrsvolumen und Aufwärtsstrecken-Unterrahmenverkehrsinformationen entsprechend dem Aufwärtsstrecken-Unterrahmenverkehrsvolumen für die Meldeperiode zum Senden (408a) zu einer zweiten Basisstation (206) vorzubereiten, wodurch die zweite Basisstation mit rechtzeitigen Daten versehen wird, aus denen eine Einstellung oder Anpassung einer Aufwärtsstrecken-Abwärtsstrecken-Verhältniskonfiguration implementiert werden kann.

2. Erste Basisstation nach Anspruch 1, die ferner eine X2-Schnittstelle (210) in Kommunikation mit dem Prozessor und der zweiten Basisstation umfasst, wobei die Abwärtsstrecken-Unterrahmenverkehrsinformationen und die Aufwärtsstrecken-Unterrahmenverkehrsinformationen zur zweiten Basisstation unter Verwendung der X2-Schnittstelle gesendet werden.

3. Basisstation nach Anspruch 1, wobei das Abwärtsstrecken-Unterrahmenverkehrsvolumen eine Abwärtsstrecken-Unterrahmensendeleistung umfasst und das Aufwärtsstrecken-Unterrahmenverkehrsvolumen eine Aufwärtsstrecken-Unterrahmenempfangsleistung umfasst.

4. Erste Basisstation nach Anspruch 1, wobei der Prozessor ferner dazu konfiguriert ist:
einen Abwärtsstreckenbitwert, der dem Abwärtsstrecken-Unterrahmenverkehrsvolumen entspricht, auf der Basis eines Schwellenwerts zu bestimmen; und
einen Aufwärtsstreckenbitwert, der dem Aufwärtsstrecken-Unterrahmenverkehrsvolumen entspricht, auf der Basis des Schwellenwerts zu bestimmen, wobei die Abwärtsstrecken-Unterrahmenverkehrsinformationen den Abwärtsstreckenbitwert umfassen und die Aufwärtsstrecken-Unterrahmenverkehrsinformationen den Aufwärtsstreckenbitwert umfassen.

5. Erste Basisstation nach Anspruch 1, wobei das Abwärtsstrecken-Unterrahmenverkehrsvolumen Informationen umfasst, die von einer relativen Abwärtsstrecken-Schmalbandsendeleistung, RNTP, erhalten werden, und das Aufwärtsstrecken-Unterrahmenverkehrsvolumen Informationen umfasst, die von einem Aufwärtsstreckenüberlastindikator, OI/einer Aufwärtsstreckenangabe einer hohen Interferenz, HII, erhalten werden.

6. Erste Basisstation nach Anspruch 5, wobei der Prozessor ferner dazu konfiguriert ist:
die relative Abwärtsstrecken-Schmalbandsendeleistung, RNTP, über die Meldeperiode zu mitteln; und
den Aufwärtsstreckenüberlastindikator, IO/die Aufwärtsstreckenangabe einer hohen Interferenz, HII, über die Meldeperiode zu mitteln, wobei die Abwärtsstrecken-Unterrahmenverkehrsinformationen die gemittelte relative Abwärtsstrecken-Schmalbandsendeleistung, RNTP, umfassen und die Aufwärtsstrecken-Unterrahmenverkehrsinformationen den gemittelten Aufwärtsstreckenüberlastindikator, OI/die Aufwärtsstreckenangabe einer hohen Interferenz, HII, umfassen.

7. Erste Basisstation nach Anspruch 1, wobei der Prozessor ferner dazu konfiguriert ist, zweite Abwärtsstrecken-Unterrahmenverkehrsinformationen und zweite Aufwärtsstrecken-Unterrahmenverkehrsinformationen von der zweiten Basisstation zu empfangen, oder wobei der Prozessor dazu konfiguriert ist, zweite Abwärtsstrecken-Unterrahmenverkehrsinformationen und zweite Aufwärtsstrecken-Unterrahmenverkehrsinformationen für einen zweiten Träger zu bestimmen und zu senden, der durch die erste Basisstation bedient wird.

8. Erste Basisstation nach Anspruch 1, wobei die erste Basisstation einen erweiterten Knoten B, eNodeB, umfasst, der dazu konfiguriert ist, innerhalb eines konfigurierten Netzes des Partnerschaftsprojekts der 3. Generation, 3GPP, der Langzeitentwicklung, LTE, zu arbeiten, und im Zeitduplexmodus, TDD-Modus, arbeitet, in dem Aufwärtsstrecken- und Abwärtsstrecken-Unterrahmen von orthogonalem Frequenzmultiplex-Vielfachzugriff, OFDMA, mit einem Benutzergerät UE übermittelt werden.

9. Erste Basisstation nach Anspruch 1, wobei die erste Basisstation ein erweiterter Knoten B (eNodeB) ist, der umfasst:
eine X2-Schnittstelle in Kommunikation mit dem Prozessor; und
wobei die zweite Basisstation ein zweiter eNodeB ist, der mit dem ersten eNodeB über die X2-Schnittstelle verbunden ist, wobei der erste eNodeB und der zweite eNodeB für den Betrieb in einem Netz des Partnerschaftsprojekts der 3. Generation, 3GPP, der Langzeitentwicklung, LTE, konfiguriert sind.

10. Erste Basisstation nach Anspruch 9,
wobei der Prozessor ferner dazu konfiguriert ist, zweite Abwärtsstrecken-Unterrahmenverkehrsinformationen und zweite Aufwärtsstrecken-Unterrahmenverkehrsinformationen vom zweiten eNodeB über die X2-Schnittstelle innerhalb der Meldeperiode zu empfangen.

11. Erste Basisstation nach Anspruch 9,
wobei das Abwärtsstrecken-Unterrahmenverkehrsvolumen eine Abwärtsstrecken-Unterrahmensendeleistung umfasst und das Aufwärtsstrecken-Unterrahmenverkehrsvolumen eine Aufwärtstrecken-Unterrahmenempfangsleistung umfasst, oder
wobei die Abwärtsstrecken-Unterrahmenverkehrsvolumeninformationen einen Abwärtsstreckenbitwert umfassen, der dem Abwärtsstrecken-Unterrahmenverkehrsvolumen gemäß einem Schwellenwert entspricht, und die Aufwärtsstrecken-Unterrahmenverkehrsinformationen einen Aufwärtsstreckenbitwert umfassen, der dem Aufwärtsstrecken-Unterrahmenverkehrsvolumen gemäß dem Schwellenwert entspricht, oder
wobei das Abwärtsstrecken-Unterrahmenverkehrsvolumen Abwärtsstrecken-Unterrahmenverkehrslastinformationen umfasst und das Aufwärtsstrecken-Unterrahmenverkehrsvolumen Aufwärtsstrecken-Unterrahmenverkehrslastinformationen umfasst, oder
wobei das Abwärtsstrecken-Unterrahmenverkehrsvolumen Informationen umfasst, die von einer relativen Abwärtsstrecken-Schmalbandsendeleistung, RNTP, erhalten werden, und das Aufwärtsstrecken-Unterrahmenverkehrsvolumen Informationen umfasst, die von einem Aufwärtsstreckenüberlastindikator, OI/einer Aufwärtsstreckenangabe einer hohen Interferenz, HII, erhalten werden, und wobei die Abwärtstrecken-Unterrahmenverkehrsvolumeninformationen einen Mittelwert des Abwärtsstrecken-Unterrahmenverkehrsvolumens für die Meldeperiode umfassen und die Aufwärtsstrecken-Unterrahmenverkehrsvolumeninformationen einen Mittelwert des Aufwärtsstrecken-Unterrahmenverkehrsvolumen für die Meldeperiode umfassen.

12. Verfahren zum dynamischen Austauschen von Verkehrsinformationen, um eine Abwärtsstrecken- und Aufwärtsstrecken-Konfiguration einzustellen, wobei das Verfahren Folgendes umfasst:
Bestimmen (402a) eines Abwärtsstrecken-Unterrahmenverkehrsvolumens für jeden Abwärtsstreckenunterrahmen innerhalb einer Meldeperiode unter Verwendung einer ersten Basisstation (202);
Bestimmen (404a) eines Aufwärtstrecken-Unterrahmenverkehrsvolumens für jeden Aufwärtsstreckenunterrahmen innerhalb der Meldeperiode; und
Senden (408a) von Abwärtsstrecken-Unterrahmenverkehrsinformationen, die dem Abwärtsstrecken-Unterrahmenverkehrsvolumen entsprechen, und von Aufwärtsstrecken-Unterrahmenverkehrsinformationen, die dem Aufwärtsstrecken-Unterrahmenverkehrsvolumen entsprechen, für die Meldeperiode zu einer zweiten Basisstation (206), wodurch die zweite Basisstation mit rechtzeitigen Daten versehen wird, aus denen die Einstellung oder Anpassung einer Aufwärtsstrecken-Abwärtsstrecken-Verhältniskonfiguration implementiert werden kann.

13. Verfahren nach Anspruch 12, wobei das Senden der Abwärtsstrecken-Unterrahmenverkehrsinformationen und der Aufwärtsstrecken-Unterrahmenverkehrsinformationen das Senden über eine X2-Schnittstelle umfasst, die zwischen die erste Basisstation und die zweite Basisstation gekoppelt ist.

14. Verfahren nach Anspruch 12,
wobei das Abwärtsstrecken-Unterrahmenverkehrsvolumen eine Abwärtsstrecken-Unterrahmensendeleistung umfasst und das Aufwärtsstrecken-Unterrahmenverkehrsvolumen eine Aufwärtstrecken-Unterrahmenempfangsleistung umfasst, oder
wobei das Abwärtsstrecken-Unterrahmenverkehrsvolumen eine Abwärtsstrecken-Unterrahmensendeleistung umfasst und die Abwärtsstrecken-Unterrahmenverkehrsinformationen einen Abwärtsstreckenbitwert umfassen, der vom Abwärtsstrecken-Unterrahmenverkehrsvolumen gemäß einem Schwellenwert abgeleitet ist, oder
wobei das Abwärtsstrecken-Unterrahmenverkehrsvolumen Informationen umfasst, die von einer relativen Abwärtsstrecken-Schmalbandsendeleistung, RNTP, erhalten werden, und das Aufwärtsstrecken-Unterrahmenverkehrsvolumen Informationen umfasst, die von einem Aufwärtsstreckenüberlastindikator, OI/einer Aufwärtsstreckenangabe einer hohen Interferenz, HII, erhalten werden.

15. Verfahren nach Anspruch 12,
wobei die erste Basisstation einen erweiterten Knoten B, eNodeB, umfasst, der dazu konfiguriert ist, gemäß einem Netz des Partnerschaftsprojekts der 3. Generation, 3GPP, der Langzeitentwicklung, LTE, zu arbeiten, und wobei der Abwärtsstreckenunterrahmen und der Aufwärtsstreckenunterrahmen in mindestens einem Funkrahmen des orthogonalen Frequenzmultiplex-Vielfachzugriffs, OFDMA, enthalten sind, der für den Zeitduplexbetrieb, TDD-Betrieb, konfiguriert ist.

## Revendications

1. Première station de base (202) pour échanger dynamiquement des informations de trafic aux fins d'ajuster une configuration de liaison descendante et de liaison montante, la première station de base étant **caractérisée par** :
un émetteur-récepteur (304a) ; et
un processeur (300a) en communication avec l'émetteur-récepteur, le processeur étant configuré pour
déterminer (402a) un volume de trafic de sous-trame de liaison descendante pour chaque sous-trame de liaison descendante au sein d'une période de notification,
déterminer (404a) un volume de trafic de sous-trame de liaison montante pour chaque sous-trame de liaison montante au sein de la période de notification, et
préparer une information de trafic de sous-trame de liaison descendante correspondant au volume de trafic de sous-trame de liaison descendante et une information de trafic de sous-trame de liaison montante correspondant au volume de trafic de sous-trame de liaison montante pour la période de notification en vue de leur transmission (408a) à une deuxième station de base (206) pour ainsi doter la deuxième station de base de données opportunes à partir desquelles il lui est possible de réaliser un ajustement ou une adaptation d'une configuration de rapport liaison montante-liaison descendante.

2. Première station de base selon la revendication 1, comprenant en outre une interface X2 (210) en communication avec le processeur et la deuxième station de base, l'information de trafic de sous-trame de liaison descendante et l'information de trafic de sous-trame de liaison montante étant transmises à la deuxième station de base à l'aide de l'interface X2.

3. Première station de base selon la revendication 1, dans laquelle le volume de trafic de sous-trame de liaison descendante comprend une puissance de transmission de sous-trame de liaison descendante et le volume de trafic de sous-trame de liaison montante comprend une puissance de réception de sous-trame de liaison montante.

4. Première station de base selon la revendication 1, dans laquelle le processeur est configuré en outre pour :
déterminer une valeur de bit de liaison descendante correspondant au volume de trafic de sous-trame de liaison descendante en fonction d'une valeur seuil ; et
déterminer une valeur de bit de liaison montante correspondant au volume de trafic de sous-trame de liaison montante en fonction de la valeur seuil, l'information de trafic de sous-trame de liaison descendante comprenant la valeur de bit de liaison descendante et l'information de trafic de sous-trame de liaison montante comprenant la valeur de bit de liaison montante.

5. Première station de base selon la revendication 1, dans laquelle le volume de trafic de sous-trame de liaison descendante comprend des informations obtenues à partir d'une puissance de transmission en bande étroite relative, RNTP, de liaison descendante, et le volume de trafic de sous-trame de liaison montante comprend des informations obtenues à partir d'un indicateur de surcharge, 01, de liaison montante/d'une indication d'interférences élevées, HII, de liaison montante.

6. Première station de base selon la revendication 5, dans laquelle le processeur est configuré en outre pour :
moyenner la puissance de transmission en bande étroite relative, RNTP, de liaison descendante sur la période de notification ; et
moyenner l'indicateur de surcharge, 01, de liaison montante/l'indication d'interférences élevées, HII, de liaison montante sur la période de notification, l'information de trafic de sous-trame de liaison descendante comprenant la puissance de transmission en bande étroite relative, RNTP, de liaison descendante moyennée et l'information de trafic de sous-trame de liaison montante comprenant l'indicateur de surcharge, 01, de liaison montante/l'indication d'interférences élevées, HII, de liaison montante moyennés.

7. Première station de base selon la revendication 1, dans laquelle le processeur est configuré en outre pour recevoir une deuxième information de trafic de sous-trame de liaison descendante et une deuxième information de trafic de sous-trame de liaison montante en provenance de la deuxième station de base, ou dans laquelle le processeur est configuré pour déterminer et transmettre une deuxième information de trafic de sous-trame de liaison descendante et une deuxième information de trafic de sous-trame de liaison montante pour une deuxième porteuse desservie par la première station de base.

8. Première station de base selon la revendication 1, dans laquelle la première station de base comprend un noeud B amélioré, eNodeB, configuré pour fonctionner au sein d'un réseau configuré selon la technologie d'évolution à long terme, LTE, du projet de partenariat pour la 3^{e} génération, 3GPP, et fonctionnant dans un mode duplex par répartition dans le temps, TDD, dans lequel des sous-trames de liaison descendante et de liaison montante en accès multiple par répartition orthogonale de la fréquence, OFDMA, sont communiquées au moyen d'un équipement utilisateur, UE.

9. Première station de base selon la revendication 1, dans laquelle la première station de base est un noeud B amélioré (eNodeB), comprenant :
une interface X2 en communication avec le processeur ; et
la deuxième station de base étant un deuxième eNodeB connecté au premier eNodeB via l'interface X2, le premier eNodeB et le deuxième eNodeB étant configurés pour fonctionner dans un réseau de la technologie d'évolution à long terme, LTE, du projet de partenariat pour la 3^{e} génération, 3GPP.

10. Première station de base selon la revendication 9, dans laquelle le processeur est configuré en outre pour recevoir une deuxième information de trafic de sous-trame de liaison descendante et une deuxième information de trafic de sous-trame de liaison montante en provenance du deuxième eNodeB via l'interface X2 au sein de la période de notification.

11. Première station de base selon la revendication 9,
dans laquelle le volume de trafic de sous-trame de liaison descendante comprend une puissance de transmission de sous-trame de liaison descendante et le volume de trafic de sous-trame de liaison montante comprend une puissance de réception de sous-trame de liaison montante, ou
dans laquelle l'information de volume de trafic de sous-trame de liaison descendante comprend une valeur de bit de liaison descendante correspondant au volume de trafic de sous-trame de liaison descendante selon une valeur seuil, et l'information de trafic de sous-trame de liaison montante comprend une valeur de bit de liaison montante correspondant au volume de trafic de sous-trame de liaison montante selon une valeur seuil, ou
dans laquelle le volume de trafic de sous-trame de liaison descendante comprend une information de charge de trafic de sous-trame de liaison descendante, et le volume de trafic de sous-trame de liaison montante comprend une information de charge de trafic de sous-trame de liaison montante, ou
dans laquelle le volume de trafic de sous-trame de liaison descendante comprend des informations obtenues à partir d'une puissance de transmission en bande étroite relative, RNTP, de liaison descendante, et le volume de trafic de sous-trame de liaison montante comprend des informations obtenues à partir d'un indicateur de surcharge, 01, de liaison montante/d'une indication d'interférences élevées, HII, de liaison montante, et dans laquelle l'information de volume de trafic de sous-trame de liaison descendante comprend une moyenne du volume de trafic de sous-trame de liaison descendante pour la période de notification et l'information de volume de trafic de sous-trame de liaison montante comprend une moyenne du volume de trafic de sous-trame de liaison montante pour la période de notification.

12. Procédé pour échanger dynamiquement des informations de trafic aux fins d'ajuster une configuration de liaison descendante et de liaison montante, le procédé comprenant les étapes consistant à
déterminer (402a), à l'aide d'une première station de base (202), un volume de trafic de sous-trame de liaison descendante pour chaque sous-trame de liaison descendante au sein d'une période de notification ;
déterminer (404a) un volume de trafic de sous-trame de liaison montante pour chaque sous-trame de liaison montante au sein de la période de notification ; et
transmettre (408a) une information de trafic de sous-trame de liaison descendante correspondant au volume de trafic de sous-trame de liaison descendante et une information de trafic de sous-trame de liaison montante correspondant au volume de trafic de sous-trame de liaison montante pour la période de notification à une deuxième station de base (206) pour ainsi doter la deuxième station de base de données opportunes à partir desquelles il lui est possible de réaliser un ajustement ou une adaptation d'une configuration de rapport liaison montante-liaison descendante.

13. Procédé selon la revendication 12, dans lequel l'étape consistant à transmettre l'information de trafic de sous-trame de liaison descendante et l'information de trafic de sous-trame de liaison montante comprend l'étape consistant à transmettre par le biais d'une interface X2 couplée entre la première station de base et la deuxième station de base.

14. Procédé selon la revendication 12,
dans lequel le volume de trafic de sous-trame de liaison descendante comprend une puissance de transmission de sous-trame de liaison descendante et le volume de trafic de sous-trame de liaison montante comprend une puissance de réception de sous-trame de liaison montante, ou
dans lequel le volume de trafic de sous-trame de liaison descendante comprend une puissance de transmission de sous-trame de liaison descendante et l'information de trafic de sous-trame de liaison descendante comprend une valeur de bit de liaison descendante dérivée du volume de trafic de sous-trame de liaison descendante selon une valeur seuil, ou
dans lequel le volume de trafic de sous-trame de liaison descendante comprend des informations obtenues à partir d'une puissance de transmission en bande étroite relative, RNTP, de liaison descendante, et le volume de trafic de sous-trame de liaison montante comprend des informations obtenues à partir d'un indicateur de surcharge, 01, de liaison montante/d'une indication d'interférences élevées, HII, de liaison montante.

15. Procédé selon la revendication 12, dans lequel la première station de base comprend un noeud B amélioré, eNodeB, configuré pour fonctionner selon un réseau de la technologie d'évolution à long terme, LTE, du projet de partenariat pour la 3^{e} génération, 3GPP, et dans lequel la sous-trame de liaison descendante et la sous-trame de liaison montante sont incorporées dans au moins une trame radio en accès multiple par répartition orthogonale de la fréquence, OFDMA, configurée pour un fonctionnement duplex par répartition dans le temps, TDD.
